# EUROPÄISCHE PATENTANMELDUNG

(11) **EP 3 229 027 A1**
(43) Veröffentlichungstag der Anmeldung: **11.10.2017**
(21) Anmeldenummer: 16164206.1
(22) Anmeldetag: 07.04.2016
(51) Int. Cl.: G01N 35/00, G06F 17/18, G01N 21/27

(54) **VERFAHREN ZUR KORREKTUR VON STÖRUNGEN**

(71) Anmelder: Siemens Healthcare Diagnostics Products GmbH, 35041 Marburg (DE)
(72) Erfinder: Anderle, Klaus, 61476 Kronberg (DE)

(57) **Zusammenfassung**

Die Erfindung betrifft ein Verfahren zur Korrektur von Störungen (4) im zeitlichen Verlauf von Messwerten (1) einer Messgröße bei einer Messung einer Probe in einem automatischen Analysegerät, wobei das automatische Analysegerät eine Messeinrichtung zur Aufnahme der Messwerte (1) und ein Steuergerät zur Verarbeitung der Messwerte (1) umfasst.

## Beschreibung

Die Erfindung liegt auf dem Gebiet der automatischen in vitro-Diagnostiksysteme. Gegenstand der Erfindung ist ein Verfahren zur Korrektur von Störungen im zeitlichen Verlauf von Messwerten einer Messgröße bei einer Messung einer Probe in einem automatischen Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Automatisch arbeitende Analysatoren, die zur Untersuchung von biologischen Körperflüssigkeiten eingesetzt werden, umfassen verschiedene Gerätebaugruppen zum Prozessieren der Probe. Beispielsweise werden die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette z.B. zur Entsorgung durch einen Abfallschacht in einen Abfallbehälter verbracht.

Ein automatisches Analysegerät umfasst üblicherweise eine Messeinrichtung zur Aufnahme von Messwerten und ein Steuergerät zur Verarbeitung der Messwerte. Beispielsweise wird mit der Messeinrichtung ein zeitlicher Verlauf der Messwerte einer Messgröße bei einer Messung einer Probe ermittelt. Die Messwerte werden dann mittels des Steuergeräts verarbeitet.

Häufig können Störungen im zeitlichen Verlauf der Messwerte auftreten. Da die Störungen im Allgemeinen die weitere Verarbeitung und Prozessierung der ermittelten Messwerte stören und zu einem fehlerhaften Messergebnis führen können, ist es wünschenswert, die Störungen durch geeignete Korrekturverfahren zu eliminieren oder wenigstens abzuschwächen.

Häufig kommt erschwerend hinzu, dass die Störungen nur schwer zu identifizieren und zu korrigieren sind, da die Messwerte und die Störungen sehr unterschiedlich sein können und um mehrere Größenordnungen in der Intensität und der Frequenz variieren können. Daher ist es im Allgemeinen sehr aufwändig, die entsprechenden Korrekturen durchzuführen, die häufig bereits während der Messung oder unmittelbar danach in Echtzeit erfolgen müssen.

Es ist daher Aufgabe der Erfindung, ein vereinfachtes und verbessertes Verfahren zur Korrektur von Störungen im zeitlichen Verlauf von Messwerten einer Messgröße bei einer Messung einer Probe in einem automatischem Analysegerät zur Verfügung zu stellen.

### Diese Aufgabe wird erfindungsgemäß durch die im Folgenden beschriebenen Gegenstände und Verfahren gelöst.

Die Erfindung geht von dem Gedanken aus, dass ein verbessertes und vereinfachtes Verfahren zur Korrektur von Störungen im zeitlichen Verlauf von Messwerten einer Messgröße bei einer Messung einer Probe in einem automatischem Analysegerät erreicht werden kann, indem in einem ersten Schritt zunächst die logarithmierten Messwerte analysiert und korrigiert werden, bevor die korrigierten logarithmierten Messwerte in einem zweiten Schritt exponenziert werden und dann nochmals analysiert und korrigiert werden. Dieses mehrschrittige Vorgehen hat den Vorteil, dass unterschiedliche Störungen einfacher und besser erkannt und korrigiert werden können.

Gegenstand der vorliegenden Erfindung ist ein Verfahren zur Korrektur von Störungen im zeitlichen Verlauf von Messwerten einer Messgröße bei einer Messung einer Probe in einem automatischem Analysegerät, wobei das automatische Analysegerät eine Messeinrichtung zur Aufnahme der Messwerte und ein Steuergerät zur Verarbeitung der Messwerte umfasst.

Das Verfahren weist folgende Schritte auf:
a) Aufnahme der Messwerte mit der Messeinrichtung,
b) Logarithmieren der Messwerte,
c) Erkennung von Bereichen mit Störungen im Verlauf der logarithmierten Messwerte mit einem ersten Algorithmus, der Abweichungen im Verlauf der Messwerte von einem erwarteten Verlauf erkennt,
d) Korrektur der Messwerte, die in einem in Schritt c) erkannten Bereich mit Störungen liegen,
e) Exponenzieren der logarithmierten Messwerte unter Berücksichtigung der in Schritt d) vorgenommenen Korrektur,
f) Erkennung von Bereichen mit Störungen im Verlauf der exponenzierten Messwerte mit einem zweiten Algorithmus, der Abweichungen im Verlauf der Messwerte von dem erwarteten Verlauf erkennt,
g) Korrektur der Messwerte, die in einem in Schritt f) erkannten Bereich mit Störungen liegen,
wobei die Schritte b) bis g) mittels des Steuergeräts durchgeführt werden.

Dieses Vorgehen hat insbesondere den Vorteil, dass vergleichsweise einfach eine verbesserte Korrektur von Störungen erfolgen kann. Insbesondere weisen die Messwerte in Abschnitten in logarithmierter Darstellung oder in exponenzierter Darstellung einen Verlauf auf, der einem geradenförmigen Verlauf ähnlich ist. Hierdurch lassen sich in den jeweiligen Abschnitten Störungen wesentlich leichter erkennen und deren Anfang und Ende bestimmen. Ein weiterer Vorteil ist, dass sowohl vergleichsweise kleine Störungen bei geringer Signalhöhe der Messwerte als auch größere Störungen bei höheren Signalpegeln der Messwerte mit einem einzigen Verfahren erkannt und behoben werden können. Dabei werden starke und/oder kurzzeitig auftretende Störungen hauptsächlich in den Schritten c) und d) des Verfahrens erkannt und korrigiert. Schwächere und/oder länger anhaltende Störungen werden hauptsächlich in den Schritten f) und g) erkannt und korrigiert.

Beispielsweise können Bereiche mit Störungen lokale Maxima (Peaks) oder Sprünge aufweisen, die Störungen darstellen können.

In einer bevorzugten Ausführung des Verfahrens umfasst der erste Algorithmus folgende Schritte: In einem ersten Schritt wird zunächst eine gemittelte lokale Steigung berechnet. Diese wird von der lokalen Steigung subtrahiert und so eine korrigierte lokale Steigung ermittelt. Übersteigt diese korrigierte lokale Steigung sowohl in positiver wie auch negativer zeitlicher Richtung einen vorbestimmten Grenzwert, so wird angenommen, dass es sich um einen lokalen Peak handelt.

In einem zweiten Schritt wird der Ausläufer des Peaks untersucht und damit die Breite des Peaks an seiner Basis bestimmt. Dies bestimmt die Breite des Interpolationsbereiches bzw. des Bereiches, in dem die Messwerte ignoriert werden.

Überschreitet die Steigung den vorbestimmten Grenzwert beispielweise nur in einer Richtung, so handelt es sich um einen Sprung. Je nach Ausprägung des Sprungs handelt es sich um eine Störung. Dies kann mittels eines weiteren Algorithmus bestimmt werden.

Für eine lokale Interpolation im Bereich des Peaks werden danach die Steigungen vor und nach dem Peak untersucht und anhand dieser Steigungen eine Interpolation der Messdaten vorgenommen.

Vorteilhafterweise werden für die Durchführung des erfindungsgemäßen Verfahrens die Messwerte lokal gemittelt. Gegebenenfalls benötigte Parameter für die lokalen Mittelungen werden vorteilhafterweise vor und/oder bei der Durchführung des Verfahrens durch die Auswertung des Rauschens der Messwerte bestimmt, wobei die Bestimmung vorteilhafterweise jeweils separat für die lineare und logarithmische Analyse erfolgt.

Bei der Messgröße handelt es sich beispielsweise um die Intensität, beispielsweise die Intensität von Licht.

Vorteilhafterweise umfasst das Steuergerät eine Messdatenverarbeitungseinheit, die zur Durchführung der Schritte b) bis g) ausgelegt ist. Bei der Messdatenverarbeitungseinheit kann es sich z.B. um einen Rechner handeln, mit dem die Schritte b) bis g) bereits während noch laufender Messung und/oder nach Beendigung der Messung durchgeführt werden können.

In bevorzugter Ausführung weist das Verfahren weiter folgenden Schritt auf, der mittels des Steuergeräts durchgeführt wird:
h) Bestimmung eines extrapolierten Messwertes für einen Zeitpunkt außerhalb des zeitlichen Verlaufs der in Schritt a) aufgenommenen Messwerte durch Extrapolation umfassend eine Interpolation der Messwerte unter Berücksichtigung der in Schritt d) und Schritt g) durchgeführten Korrektur.

Dies hat den Vorteil, dass eine Anpassung einer Funktion an den zeitlichen Verlauf der Messwerte aufgrund der extrapolierten Messwerte häufig leichter erfolgen kann und verbesserte Ergebnisse liefert.

In weiterer bevorzugter Ausführung des Verfahrens umfasst die Interpolation der Messwerte eine Interpolation 2. Ordnung. Dies hat den Vorteil, dass die Interpolation besonders einfach und schnell ausgeführt werden kann.

In weiterer bevorzugter Ausführung des Verfahrens entspricht der extrapolierte Messwert einem Messwert zum Zeitpunkt des Beginns einer Reaktion in der Probe. Dies hat den Vorteil, dass die Anpassung der Funktion verbesserte Ergebnisse liefert.

In weiterer bevorzugter Ausführung umfasst das Verfahren weiter folgenden Schritt, der mittels des Steuergeräts durchgeführt wird:
i) Anpassung einer Funktion an den Verlauf der Messwerte unter Berücksichtigung der in Schritt d) und Schritt g) durchgeführten Korrektur.

Bei der Funktion handelt es sich vorteilhafterweise um eine Funktion, die den zeitlichen Verlauf von ungestörten Messwerten wiedergeben kann und möglichst wenig Parameter für eine gute Übereinstimmung von Werten der Funktion und Messwerten benötigt. Dabei müssen die Funktion und deren Parameter nicht unbedingt in einem direkten Zusammenhang zu physikalisch relevanten Größen stehen.

Dieses Vorgehen hat den Vorteil, dass zeitliche Verläufe von Messwerten, bei denen Störungen in für eine Auswertung relevanten zeitlichen Bereichen liegen, zuverlässiger ausgewertet werden können.

In weiterer bevorzugter Ausführung des Verfahrens ist die Funktion eine log-logistische Funktion, bevorzugt eine log-logistische Hill Funktion.

Dies hat den Vorteil, dass bestimmte zeitliche Verläufe von Messwerten, die in automatischen Analysatoren häufig auftreten, besonders zuverlässig und genau angepasst werden können.

In weiterer bevorzugter Ausführung des Verfahrens handelt es sich bei den Störungen um lokale Extrempunkte im Verlauf der Messwerte.

In weiterer bevorzugter Ausführung des Verfahrens handelt es sich bei mindestens einer der Korrekturen um eine Vernachlässigung der in dem Bereich mit den Störungen liegenden Messwerte für alle folgenden Schritte des Verfahrens.

Dies hat den Vorteil, dass die Korrektur besonders einfach und mit wenig Aufwand erfolgen kann.

In weiterer bevorzugter Ausführung des Verfahrens handelt es sich bei mindestens einer der Korrekturen um eine Ersetzung der in dem Bereich mit den Störungen liegenden Messwerte durch extrapolierte Messwerte, wobei die extrapolierten Messwerte mittels einer Interpolation mindestens eines Teils der Messwerte ermittelt werden.

Dies hat den Vorteil, dass die Korrektur besonders genau erfolgen kann.

In weiterer bevorzugter Ausführung des Verfahrens grenzt der Teil der Messwerte an den Bereich mit den Störungen direkt an. Dies hat den Vorteil, dass eine lokale Interpolation und Korrektur erfolgen kann.

In weiterer bevorzugter Ausführung des Verfahrens handelt es sich um ein Verfahren zur Bestimmung der Konzentration oder Aktivität eines Analyten in einer Probe mittels einer Messung der Probe in einem automatischen Analysegerät, wobei durch Vermischen der Probe mit mindestens einem Reagenz eine analytabhängige Reaktion in Gang gesetzt wird und wobei durch Auswertung des zeitlichen Verlaufs von sich infolge der analytabhängigen Reaktion über die Zeit ändernden Messwerten einer Messgröße die Konzentration oder Aktivität des Analyten bestimmt wird, wobei Störungen im zeitlichen Verlauf der Messwerte mit einem erfindungsgemäßem Verfahren korrigiert werden.

In weiterer bevorzugter Ausführung des Verfahrens enthält die Probe eine Patientenprobe, einen Kalibrator und/oder eine Kontrolllösung.

In weiterer bevorzugter Ausführung des Verfahrens enthält die Probe eine Körperflüssigkeit, bevorzugt Blut oder Urin.

Bevorzugterweise kommt das Verfahren nur dann zum Einsatz, wenn eine Auswertung des Verlaufs von nicht korrigierten Messwerten zu einem auffälligen oder zweifelhaften Ergebnis führt.

Bevorzugt werden Ergebnisse, die unter Zuhilfenahme des erfindungsgemäßen Verfahrens ermittelt werden, mit einem entsprechenden Hinweis versehen, der z.B. auch einen Warnhinweis umfassen kann.

Ein weiterer Gegenstand der Erfindung ist ein automatisches Analysegerät zur Messung eines zeitlichen Verlaufs von Messwerten einer Messgröße einer Probe, wobei das automatische Analysegerät eine Messeinrichtung zur Aufnahme von Messwerten und mindestens ein Steuergerät umfasst, wobei das Steuergerät so konfiguriert ist, dass es die Durchführung eines erfindungsgemäßen Verfahrens zur Korrektur von Störungen oder eines erfindungsgemäßen Verfahrens zur Bestimmung der Konzentration oder Aktivität eines Analyten steuern kann.

In bevorzugter Ausführung umfasst das automatische Analysegerät eine Vielzahl von Aufnahmepositionen für jeweils ein Primär-, Aliquot-, und/oder Zielgefäß und/oder mindestens eine automatische Pipettiervorrichtung mit einem robotisch verfahrbaren und/oder robotisch schwenkbaren Transferarm.

Ein automatisches Analysegerät umfasst in bevorzugter Ausführung eine Vielzahl von Gerätebaugruppen. Bei den Gerätebaugruppen handelt es sich z.B. um eine beispielsweise scheibenförmige Transport- und Lagereinrichtung für Probengefäße, eine beispielsweise scheibenförmige Transport- und Lagereinrichtung für Reagenzbehälter, einen Inkubationsblock, ein Photometer oder eine andere Baugruppe des automatischen Analysegeräts, die zum Prozessieren von Proben benötigt wird.

In weiterer bevorzugter Ausführungsform befindet sich die Probe in einer nicht ortsfesten Küvette, und mindestens eine, bevorzugt mindestens zwei Gerätebaugruppen sind als Aufnahmepositionen für die Küvette ausgestaltet. Dies hat den Vorteil, dass eine Vielzahl von Proben und Analysen besonders flexibel abgearbeitet werden können.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren, wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

### Die Erfindung wird anhand von Zeichnungen exemplarisch näher erläutert. Darin zeigen:

FIG 1 eine schematische Darstellung eines zeitlichen Verlaufs von nicht korrigierten Messwerten (1),
FIG 2 eine schematische Darstellung der logarithmierten Messwerte (1) aus FIG 1 nach erfolgter Korrektur von Störungen (4),
FIG 3 eine schematische Darstellung der exponenzierten Messwerte (1) aus FIG 2 nach erfolgter Korrektur der Störungen (4),
FIG 4 eine schematische Darstellung der Messwerte (1) aus FIG 3 nach erfolgter Korrektur der Störungen (4) und mit einem Graphen einer an die korrigierten Messwerte (1) angepassten Funktion (5),
FIG 5 eine schematische Darstellung von Messwerten (1) nach einer Korrektur von Störungen (4),
FIG 6 eine schematische Darstellung von Messwerten (1) nach einer Korrektur von Störungen (4) mit einem Graphen einer an die Messwerte (1) angepassten Funktion (5),
FIG 7 eine schematische Darstellung von Messwerten (1) mit niedrigen Intensitäten (2),
FIG 8 und FIG 9 eine schematische Darstellung von Messwerten mit einem Bereich mit Störungen (4) zu Beginn des Verlaufs der Messwerte (1).

### Gleiche Teile sind in allen Figuren mit denselben Bezugszeichen versehen.

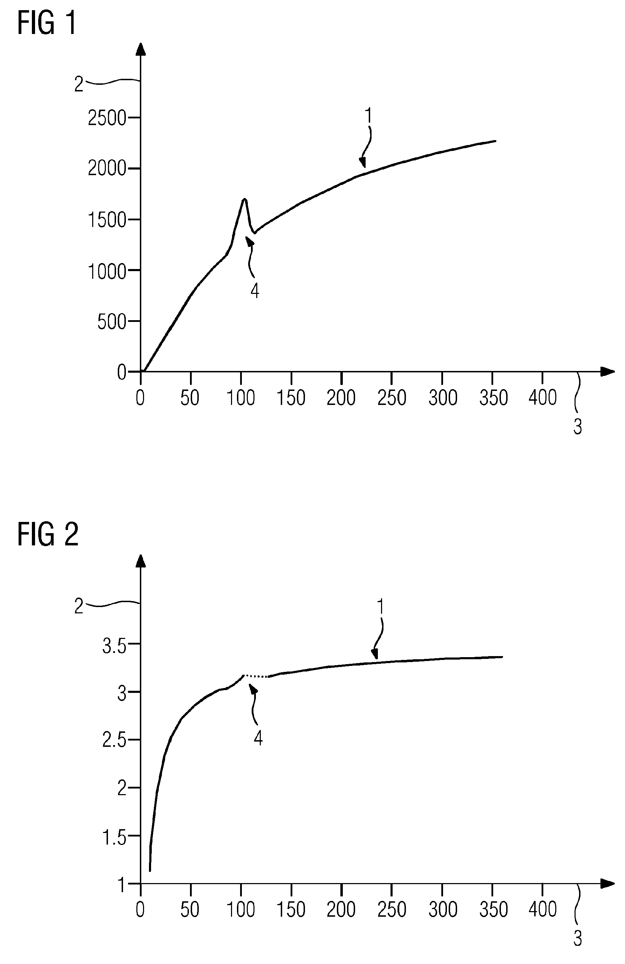

Die Messwerte der zeitlichen Verläufe von Messwerten gemäß FIG 1 bis FIG 9 sind mit einer nicht näher dargestellten Messeinrichtung in einem automatischen Analysegerät aufgenommen, das zum Prozessieren einer Probe ausgelegt ist und das eine Steuereinheit mit einem Computersystem zur Verarbeitung der Messwerte sowie zur Steuerung des Prozessierens der Probe und eine Mehrzahl von Gerätebaugruppen zum Prozessieren der Probe umfasst, wie z.B. Pipettiervorrichtungen und Transporteinrichtungen.

FIG 1 zeigt schematisch eine Darstellung eines zeitlichen Verlaufs von nicht korrigierten Messwerten (1). Aufgetragen ist die Intensität (2) der Messwerte (1), die im Bereich von 0 bis 2500 Einheiten liegt, gegen die Zeit t (3) von Null bis 400 Sekunden, zu der die jeweiligen Messwerte (1) aufgenommen wurden. Im Bereich von etwa t=90 bis etwa t=130 der Messwerte (1) ist eine Störung (4) in Form eines Peaks deutlich erkennbar. Die Intensität (2) der Messwerte (1) und die Zeit t (3) sind jeweils linear aufgetragen.

FIG 2 zeigt schematisch eine Darstellung eines zeitlichen Verlaufs der korrigierten Messwerte (1) aus FIG 1. Aufgetragen ist die logarithmierte Intensität (2) der Messwerte (1), die im Bereich von 1 bis 3,5 Einheiten liegt, gegen die Zeit t (3) von Null bis 400 Sekunden, zu der die jeweiligen Messwerte (1) aufgenommen wurden. Im Bereich von etwa t=90 bis etwa t=130 der Messwerte (1) befand sich eine Störung (4) in Form eines Peaks, der von einem ersten Algorithmus erkannt wurde und korrigiert ist durch Vernachlässigung der in dem Bereich mit den Störungen (4) liegende Messwerte (1) für alle folgenden Schritte. Deutlich zu erkennen ist der Bereich der vernachlässigten Messwerte (1) durch eine horizontal verlaufende, gepunktete Linie. Die Intensität (2) der Messwerte (1) ist logarithmisch und die Zeit t (3) ist linear aufgetragen.

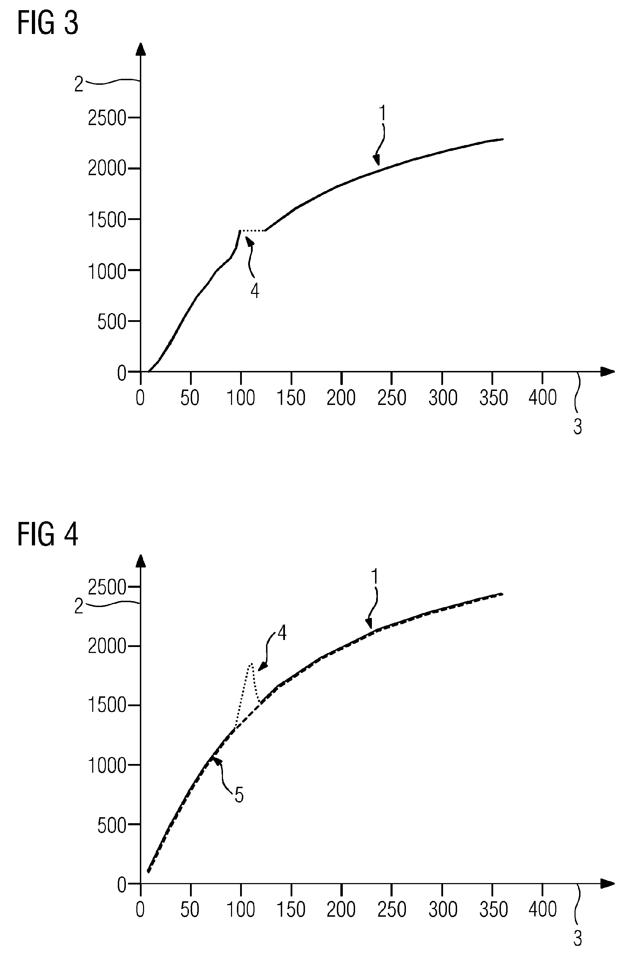

FIG 3 zeigt schematisch eine Darstellung des zeitlichen Verlaufs der korrigierten Messwerte (1) der FIG 2. Aufgetragen ist die Intensität (2) der Messwerte (1), die im Bereich von 0 bis 2500 Einheiten liegt, gegen die Zeit t (3) von Null bis 400 Sekunden, zu der die jeweiligen Messwerte (1) aufgenommen wurden. Die logarithmierten korrigierten Messwerte (1) aus FIG 2 wurden exponenziert. Ein zweiter Algorithmus erkannte keine weiteren Bereiche mit Störungen (4); somit wurden keine weiteren Korrekturen an den Messwerten (1) vorgenommen. Die Intensität (2) der Messwerte (1) und die Zeit t (3) sind jeweils linear aufgetragen.

Die Erkennung der Bereiche mit Störungen (4) und die Korrektur der Störungen (4) erfolgt mittels des Steuergeräts.

FIG 4 zeigt schematisch eine Darstellung des zeitlichen Verlaufs von korrigierten Messwerten (1) der FIG 3. Aufgetragen ist die Intensität (2) der Messwerte (1), die im Bereich von 0 bis 2500 Einheiten liegt, gegen die Zeit t (3) von Null bis 400 Sekunden, zu der die jeweiligen Messwerte (1) aufgenommen wurden. Die Intensität (2) der Messwerte (1) und die Zeit t (3) sind jeweils linear aufgetragen. Die Messwerte (1) sind als durchgezogene Linie dargestellt. Eine log-logistische Hill Funktion (5) wurde mittels des Steuergeräts an die korrigierten Messdaten (1) angepasst. Der Graph der log-logistische Hill Funktion (5) ist als gestrichelte Linie dargestellt. Die Messwerte (1) im Bereich mit der Störung (4), die als gepunktet Linie dargestellt sind, wurden bei der Anpassung der Funktion (5) vernachlässigt.

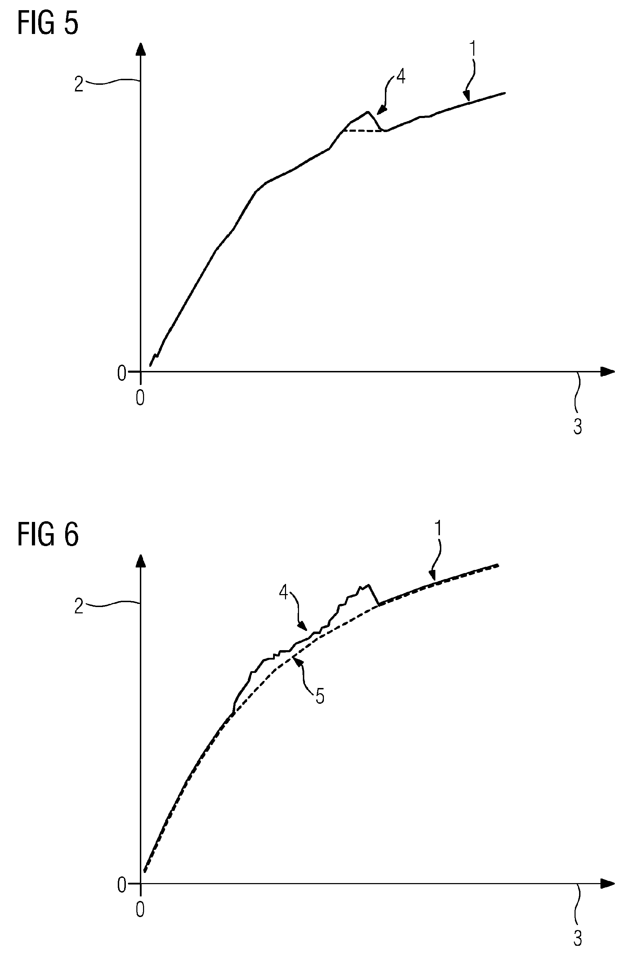

FIG 5 zeigt schematisch eine Darstellung eines Ausschnitts des zeitlichen Verlaufs von Messwerten (1). Aufgetragen ist die Intensität (2) der Messwerte (1) gegen die Zeit t (3), zu der die jeweiligen Messwerte (1) aufgenommen wurden. Die Intensität (2) der Messwerte (1) und die Zeit t (3) sind jeweils linear aufgetragen. In einem Bereich wurden mittels des ersten Algorithmus Störungen (4) erkannt. Die Störungen (4) wurden in dem Bereich, der mit einer horizontal verlaufenden, gestrichelten Linie markiert ist, korrigiert, indem die Messwerte (1) in diesem Bereich für die weiteren Schritte vernachlässigt werden.

FIG 6 zeigt schematisch eine Darstellung eines Ausschnitts des zeitlichen Verlaufs von Messwerten (1). Aufgetragen ist die Intensität (2) der Messwerte (1) gegen die Zeit t (3), zu der die jeweiligen Messwerte (1) aufgenommen wurden. Die Intensität (2) der Messwerte (1) und die Zeit t (3) sind jeweils linear aufgetragen. Die Messwerte (1) sind als durchgezogene Linie dargestellt. In einem Bereich wurden mittels des ersten Algorithmus Störungen (4) erkannt. Die Störungen (4) wurden korrigiert, indem eine log-logistische Hill Funktion (5) an die Messwerte (1) angepasst wurde. Der Graph der log-logistische Hill Funktion (5) ist als gestrichelte Linie dargestellt.

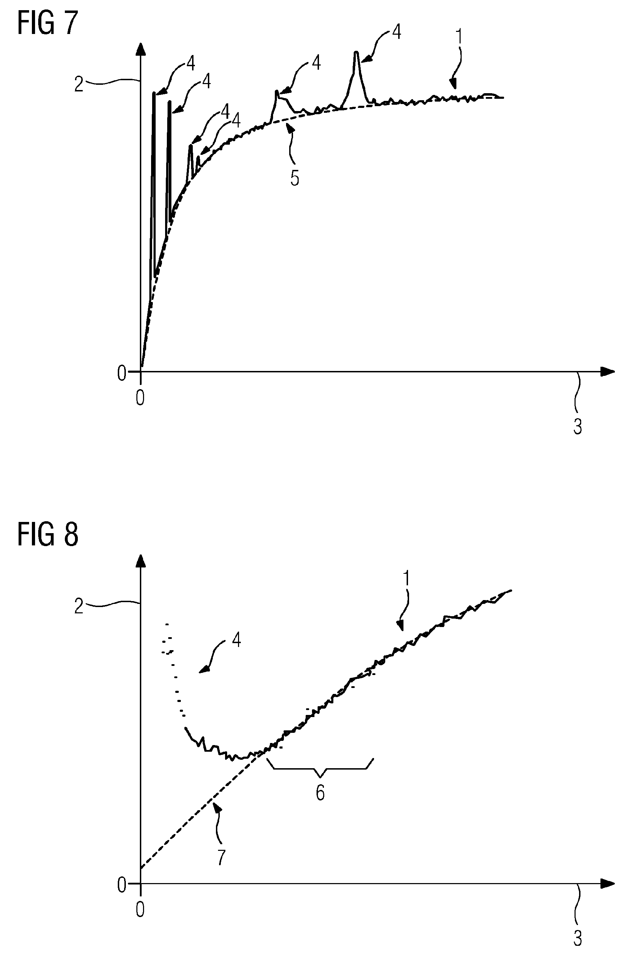

FIG 7 zeigt schematisch eine Darstellung eines zeitlichen Verlaufs von Messwerten (1) mit vergleichsweise niedrigen Intensitätswerten. Aufgetragen ist die logarithmierte Intensität (2) der Messwerte (1), gegen die Zeit t (3), zu der die jeweiligen Messwerte (1) aufgenommen wurden. Die logarithmierten Messwerte (1) sind als durchgezogene Linie dargestellt. Zahlreiche Bereiche mit Störungen (4) in Form von Peaks sind deutlich zu erkennen, die von einem ersten Algorithmus erkannt wurden und korrigiert sind durch Vernachlässigung der in den Bereichen mit den Störungen (4) liegende Messwerte (1) für alle folgenden Schritte. Die Intensität (2) der Messwerte (1) ist logarithmisch und die Zeit t (3) ist linear aufgetragen. Eine log-logistische Hill Funktion (5) wurde mittels des Steuergeräts an die korrigierten Messdaten (1) angepasst. Der Graph der log-logistische Hill Funktion (5) ist als gestrichelte Linie dargestellt. Die Messwerte (1) in den Bereichen mit den Störungen (4) wurden bei der Anpassung der Funktion (5) vernachlässigt.

Bei Messwerten (1) mit vergleichsweise niedrigen Intensitätswerten kann es wichtig sein, die lokale Höhe des Rauschens auf den Messwerten (1) zu bewerten und in den ersten Algorithmus einfließen zu lassen, um Bereiche mit Störungen (4) korrekt identifizieren zu können. Messwerte (1), die Schwankungen im Bereich des Rauschens aufweisen, werden nicht als Störungen (4) erkannt, sondern als valide behandelt und im nächsten Schritt von einem zweiten Algorithmus entsprechend bewertet. So können trotz sehr starken Rauschens relativ zur Höhe der Intensität der Messwerte (1) Bereiche mit Störungen (4) erkannt werden, die tatsächlich Störungen (4) aufweisen und abgegrenzt werden von Bereichen, in denen lediglich Rauschen auf den Messwerten (1) liegt, es sich jedoch um keine Störungen (4) handelt.

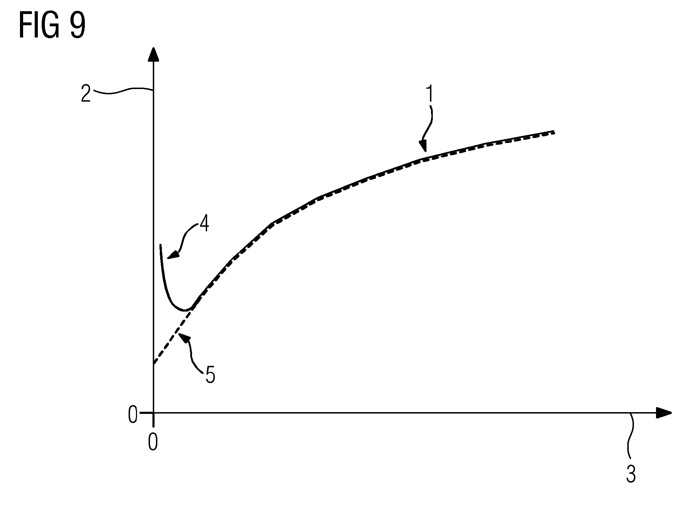

FIG 8 und FIG 9 zeigen den Verlauf von Messwerten (1) im Bereich des Beginns einer Reaktion einer Probe. Der Beginn der Reaktion erfolgt zum Zeitpunkt t = 0. Liegt zu Beginn der Reaktion ein Bereich mit Störungen (4), dann wird anhand von Messwerten aus einem an den Bereich mit den Störungen (4) angrenzenden Bereich (6), wie in FIG 8 dargestellt, eine Interpolation (7) zweiter Ordnung vorgenommen (gestrichelte Linie) und die Messwerte (1) aus dem Bereich mit den Störungen (4) werden entsprechend durch die korrigierten Messwerte aus der Interpolation (7) ersetzt. Insbesondere wird so ein korrigierter Messwert (1) für den Zeitpunkt t = 0 erhalten.

FIG 9 zeigt eine an die korrigierten Messwerte (1) aus FIG 8 mittels des Steuergeräts angepasste log-logistische Hill Funktion (5). Der Graph der log-logistische Hill Funktion (5) ist als gestrichelte Linie dargestellt.

### Bezugszeichenliste

- 1: Messwerte
- 2: Intensität
- 3: Zeit t
- 4: Störungen
- 5: Funktion
- 6: angrenzender Bereich
- 7: Interpolation

## Patentansprüche

1. Verfahren zur Korrektur von Störungen (4) im zeitlichen Verlauf von Messwerten (1) einer Messgröße bei einer Messung einer Probe in einem automatischem Analysegerät, wobei das automatische Analysegerät eine Messeinrichtung zur Aufnahme der Messwerte (1) und ein Steuergerät zur Verarbeitung der Messwerte (1) umfasst,
aufweisend die Schritte:
a) Aufnahme der Messwerte (1) mit der Messeinrichtung,
b) Logarithmieren der Messwerte (1),
c) Erkennung von Bereichen mit Störungen (4) im Verlauf der logarithmierten Messwerte (1) mit einem ersten Algorithmus, der Abweichungen im Verlauf der Messwerte (1) von einem erwarteten Verlauf erkennt,
d) Korrektur der Messwerte (1), die in einem in Schritt c) erkannten Bereich mit Störungen (4) liegen,
e) Exponenzieren der logarithmierten Messwerte (1) unter Berücksichtigung der in Schritt d) vorgenommenen Korrektur,
f) Erkennung von Bereichen mit Störungen (4) im Verlauf der exponenzierten Messwerte (1) mit einem zweiten Algorithmus, der Abweichungen im Verlauf der Messwerte (1) von dem erwarteten Verlauf erkennt,
g) Korrektur der Messwerte (1), die in einem in Schritt f) erkannten Bereich mit Störungen (4) liegen,
wobei die Schritte b) bis g) mittels des Steuergeräts durchgeführt werden.

2. Verfahren nach Anspruch 1, aufweisend weiter folgenden Schritt, der mittels des Steuergeräts durchgeführt wird:
h) Bestimmung eines extrapolierten Messwertes (1) für einen Zeitpunkt außerhalb des zeitlichen Verlaufs der in Schritt a) aufgenommenen Messwerte (1) durch Extrapolation umfassend eine Interpolation (7) der Messwerte (1) unter Berücksichtigung der in Schritt d) und Schritt g) durchgeführten Korrektur.

3. Verfahren nach Anspruch 2, wobei die Interpolation (7) der Messwerte (1) eine Interpolation (7) 2. Ordnung umfasst.

4. Verfahren nach einem der Ansprüche 2 und 3, wobei der extrapolierte Messwert (1) einem Messwert (1) zum Zeitpunkt des Beginns einer Reaktion in der Probe entspricht.

5. Verfahren nach einem der vorhergehenden Ansprüche, umfassend weiter folgenden Schritt, der mittels des Steuergeräts durchgeführt wird:
i) Anpassung einer Funktion (5) an den Verlauf der Messwerte (1) unter Berücksichtigung der in Schritt d) und Schritt g) durchgeführten Korrektur.

6. Verfahren nach Anspruch 5, wobei die Funktion (5) eine log-logistische Funktion (5), bevorzugt eine log-logistische Hill Funktion (5) ist.

7. Verfahren nach einem der vorhergehenden Ansprüche, wobei es sich bei den Störungen (4) um lokale Extrempunkte im Verlauf der Messwerte (1) handelt.

8. Verfahren nach einem der vorhergehenden Ansprüche, wobei es sich bei mindestens einer der Korrekturen um eine Vernachlässigung der in dem Bereich mit den Störungen (4) liegende Messwerte (1) für alle folgenden Schritte des Verfahrens handelt.

9. Verfahren nach einem der vorhergehenden Ansprüche, wobei es sich bei mindestens einer der Korrekturen um eine Ersetzung der in dem Bereich mit den Störungen (4) liegender Messwerte (1) durch extrapolierte Messwerte (1) handelt, wobei die extrapolierten Messwerte (1) mittels einer Interpolation (7) mindestens eines Teils der Messwerte (1) ermittelt werden.

10. Verfahren nach Anspruch 9, wobei der Teil der Messwerte (1) an den Bereich mit den Störungen (4) direkt angrenzt.

11. Verfahren zur Bestimmung der Konzentration oder Aktivität eines Analyten in einer Probe mittels einer Messung der Probe in einem automatischen Analysegerät, wobei durch Vermischen der Probe mit mindestens einem Reagenz eine analytabhängige Reaktion in Gang gesetzt wird und wobei durch Auswertung des zeitlichen Verlaufs von sich infolge der analytabhängigen Reaktion über die Zeit ändernden Messwerten (1) einer Messgröße die Konzentration oder Aktivität des Analyten bestimmt wird, **dadurch gekennzeichnet, dass** Störungen (4) im zeitlichen Verlauf der Messwerte (1) mit einem Verfahren nach einem der Ansprüche 1 bis 10 korrigiert werden.

12. Verfahren nach einem der vorhergehenden Ansprüche, wobei die Probe eine Patientenprobe, einen Kalibrator und/oder eine Kontrolllösung enthält.

13. Verfahren nach einem der vorhergehenden Ansprüche, wobei die Probe eine Körperflüssigkeit, bevorzugt Blut oder Urin enthält.

14. Automatisches Analysegerät zur Messung eines zeitlichen Verlaufs von Messwerten (1) einer Messgröße einer Probe, wobei das automatische Analysegerät eine Messeinrichtung zur Aufnahme von Messwerten (1) und mindestens ein Steuergerät umfasst, **dadurch gekennzeichnet, dass** das Steuergerät so konfiguriert ist, dass es die Durchführung eines Verfahrens zur Korrektur von Störungen (4) nach einem der Ansprüche 1 bis 10 oder 12 bis 13 oder eines Verfahrens zur Bestimmung der Konzentration oder Aktivität eines Analyten nach einem der Ansprüche 11 bis 13 steuert.

15. Automatisches Analysegerät nach Anspruch 14, wobei das automatische Analysegerät eine Vielzahl von Aufnahmepositionen für jeweils ein Primär-, Aliquot-, und/oder Zielgefäß und/oder mindestens eine automatische Pipettiervorrichtung mit einem robotisch verfahrbaren und/oder robotisch schwenkbaren Transferarm umfasst.
